# EUROPÄISCHE PATENTSCHRIFT

(11) **EP 2 985 170 B1**
(45) Veröffentlichungstag und Bekanntmachung des Hinweises auf die Patenterteilung: **04.08.2021**
(21) Anmeldenummer: 15000732.6
(22) Anmeldetag: 12.03.2015
(51) Int. Cl.: B60L 50/50, B60L 15/38

(54) **Hybridfahrzeug mit einer externen elektrischen Schnittstelle**
HYBRID VEHICLE WITH AN EXTERNAL ELECTRIC INTERFACE
VÉHICULE HYBRIDE ÉQUIPÉ D'UNE INTERFACE ÉLECTRIQUE EXTERNE

(30) Priorität: 13.08.2014 DE 102014012090
(43) Veröffentlichungstag der Anmeldung: 17.02.2016
(73) Patentinhaber: MAN Truck & Bus SE, 80995 München (DE)
(72) Erfinder: Mayer, Florian, 83064 Raubling (DE); Müller, Bernd, 81375 München (DE); Kirchensteiner, Elmar, 85256 Vierkirchen (DE); Fissmann, Tobias, 80939 München (DE)
(74) Vertreter: v. Bezold & Partner Patentanwälte - PartG mbB

(56) Entgegenhaltungen:
- EP-A2- 2 039 577
- WO-A1-93/07023
- US-A1- 2011 114 398
- US-A1- 2011 240 385
- US-A1- 2011 253 463
- US-A1- 2012 193 153
- None

## Beschreibung

Die Erfindung betrifft ein Kraftfahrzeug, vorzugsweise ein Nutzfahrzeug, mit einem Hybridantriebsaggregat und einer externen elektrischen Schnittstelle zum Anschluss eines Anhängers, Aufliegers oder stationären Geräts.

Aus dem Stand der Technik ist es bekannt, ein Niederspannungsbordnetz eines Nutzfahrzeugs mit einer externen elektrischen Schnittstelle zu versehen, über die das Bordnetz des Nutzfahrzeugs mit einem Bordnetz eines mit dem Nutzfahrzeug gekoppelten Anhängers verbindbar ist. Im Falle eines Stadtbusses, der mit einer derartigen externen Schnittstelle ausgestattet ist, können über diese Schnittstelle beispielsweise verschiedene elektrische Verbraucher eines Anhängerbordnetzes eines mit dem Stadtbus gekoppelten Personenanhängers, wie beispielsweise Klima- und Heizanlagen, Beleuchtungsanlagen etc., mit Strom versorgt werden.

Ferner ist aus dem Stand der Technik bekannt, über eine externe Schnittstelle eines Zugfahrzeugs eine Kommunikation zwischen dem Zugfahrzeug und einem angekoppelten Anhänger zur Koordinierung von Bremsvorgängen, beispielsweise unter Verwendung eines Antiblockiersystems (ABS), zu nutzen. Aus dem landwirtschaftlichen Bereich ist ferner bekannt, einem Anhänger oder Anbaugerät über eine externe Hochvoltschnittstelle Energie bereitzustellen.

Nachteilig an den bekannten externen Schnittstellen ist, dass diese üblicherweise für einen bestimmten Einsatzzweck ausgelegt und daher nicht flexibel und universell nutzbar sind.

So offenbart auch die Offenlegungsschrift US 2012/193153 A1 eine Kopplung zwischen einem Fahrzeug und einem Anhänger, der ein eigenes Antriebssystem aufweist. Der Anhänger und das Fahrzeug sind sowohl mechanisch als auch elektrisch miteinander verbunden. Es besteht die Möglichkeit eines Energieaustausches zwischen dem Energiespeicher im Anhänger und dem Energiespeicher im Fahrzeug. Ferner können Betriebsdaten zwischen Anhänger und Fahrzeug ausgetauscht werden.

Es ist somit eine Aufgabe der Erfindung, eine verbesserte Möglichkeit zum elektrischen Anschließen einer externen Vorrichtung an ein Fahrzeug bereitzustellen, mit der Nachteile herkömmlicher Techniken vermieden werden können. Die Aufgabe der Erfindung ist es insbesondere, ein Hybridfahrzeug mit einer möglichst universell nutzbaren externen Schnittstelle bereitzustellen. Die Schnittstelle soll ferner einen unter Energiemanagementgesichtspunkten abgestimmten Betrieb von im Kraftfahrzeug und in der angeschlossenen externen Vorrichtung vorgesehenen elektrischen Antriebsaggregaten ermöglichen.

Diese Aufgaben werden durch ein Kraftfahrzeug mit den Merkmalen des Hauptanspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Die Erfindung betrifft ein Kraftfahrzeug, das mit einem Hybridantriebsaggregat, welches mit einem Traktionsenergienetz des Kraftfahrzeugs verbunden ist, ausgestattet ist. Das Hybridantriebsaggregat umfasst zum Vortrieb des Kraftfahrzeugs eine motorisch und vorzugsweise auch generatorisch betreibbare elektrische Maschine, nachfolgend auch als E-Motor bezeichnet, und eine Brennkraftmaschine, nachfolgend auch als Verbrennungsmotor bezeichnet. Das Fahrzeug ist somit als Hybridfahrzeug ausgebildet.

Das Traktionsenergienetz ist ein an sich bekanntes Fahrzeugbordnetz bzw. Teilbordnetz, über welches die elektrische Traktionsenergie übertragen wird und an dem die elektrische Maschine und vorzugsweise auch ein elektrischer Energiespeicher zur Speicherung von Traktionsenergie angeschlossen sind. Das Traktionsenergienetz ist vorzugsweise ein Hochvoltnetz, welches mit einer Nominalspannung im Bereich von mehreren 100 Volt betrieben wird. Erfindungsgemäß ist es zwar vorteilhaft, aber nicht erforderlich, einen elektrischen Traktionsenergiespeicher im Fahrzeug vorzusehen, da es die Erfindung ermöglicht, einen entsprechenden Traktionsenergiespeicher eines angeschlossenen Anhängers oder Aufliegers zu nutzen, was nachfolgend noch erläutert wird.

Gemäß allgemeinen Gesichtspunkten der Erfindung weist das erfindungsgemäße Kraftfahrzeug ferner eine externe Schnittstelleneinrichtung auf. Die externe Schnittstelleneinrichtung umfasst eine bidirektionale Datenschnittstelle zum Datenaustausch mit einer externen Vorrichtung und eine Hochvoltschnittstelle, die vorzugsweise ebenfalls bidirektional ausgeführt ist, zum Austausch von elektrischer Energie mit der externen Vorrichtung. Die Hochvoltschnittstelle ist hierbei mit dem Traktionsenergienetz des Kraftfahrzeugs verbunden.

Das Kraftfahrzeug umfasst ferner eine Steuereinrichtung, die eingerichtet ist, über die Datenschnittstelle Identifizierungsdaten und Betriebsdaten von der externen Vorrichtung zu empfangen. Die Datenstruktur und mögliche Werte für die Identifizierungsdaten und Betriebsdaten sind vorab festgelegt und können insbesondere einen an die Schnittstelleneinrichtung angeschlossenen elektrischen Energiespeicher und/oder ein strombetriebenes Antriebsaggregat der externen Vorrichtung kennzeichnen, d. h. identifizieren und beschreiben. Die Steuereinrichtung kann somit anhand der über die Datenschnittstelle empfangenen Identifizierungs- und aktueller Betriebsdaten erkennen, was an der externen Schnittstelleneinrichtung angeschlossen ist und wie der aktuelle Betriebszustand ist.

Die Steuereinrichtung ist ferner eingerichtet, in Abhängigkeit von den empfangenen Identifizierungsdaten und Betriebsdaten sowohl eine Energieübertragung über die Hochvoltschnittstelle zu steuern als auch Steuerdaten für die externe Vorrichtung zu bestimmen und über die Datenschnittstelle an die externe Vorrichtung zu senden.

Ein besonderer Vorzug der vorliegenden Erfindung liegt somit darin, dass die erfindungsgemäß eingerichtete Steuereinrichtung anhand der über die Datenschnittstelle empfangenen Identifizierungs- und Betriebsdaten erkennen kann, ob etwas, was und in welchem Betriebszustand an der externen Schnittstelle angeschlossen ist und dass die Steuereinrichtung eine Ansteuerung der Hochvoltschnittstelle zur Energieübertragung entsprechend anpassen kann. Es wird somit eine universell nutzbare externe Hybridschnittstelle am Fahrzeug bereitgestellt.

Ein weiterer Vorteil ist, dass das Übertragen von entsprechenden Steuerdaten von der Steuereinrichtung über die Datenschnittstelle an die externe Vorrichtung ermöglicht, dass die externe Vorrichtung entsprechend ebenfalls von der fahrzeuginternen Steuereinrichtung gesteuert wird. Somit wird eine optimale abgestimmte Ansteuerung der an das Traktionsenergienetz angeschlossenen Komponenten des Fahrzeugs als auch der an die Hochvoltschnittstelle angeschlossenen Komponenten der externen Vorrichtung ermöglicht. Hierbei ist die externe Vorrichtung so auszuführen, dass die an die Hochvoltschnittstelle angeschlossenen Komponenten der externen Vorrichtung gemäß der über die Datenschnittstelle empfangenen Steuerdaten ansteuerbar sind.

Gemäß einer hervorgehobenen Ausführungsform ist das Kraftfahrzeug ein Nutzfahrzeug. Die externe Vorrichtung ist ein Anhänger oder Auflieger des Kraftfahrzeugs. Der Anhänger oder Auflieger umfasst ein elektrisches Antriebsaggregat und/oder einen elektrischen Energiespeicher, die jeweils im an der externen Schnittstellenvorrichtung angeschlossenen Zustand des Anhängers oder Aufliegers mittelbar oder unmittelbar sowohl mit der Datenschnittstelle als auch der Hochvoltschnittstelle verbunden sind.

Das elektrische Antriebsaggregat des Anhängers kann beispielsweise eine elektromotorische Achse des Anhängers sein, die von der fahrzeuginternen Steuereinrichtung über die Datenschnittstelle so ansteuerbar ist und/oder angesteuert wird, dass diese das Zugfahrzeug entlastet oder bei Schwertransporten zusätzliche Antriebsleistung bereitstellt bzw. die Manövrierfähigkeit erhöht.

Ferner besteht im Rahmen der Erfindung die Möglichkeit, an die externe Schnittstelleneinrichtung statt eines Anhängers oder Aufliegers eine stationäre Einrichtung anzuschließen, beispielsweise um dieser vom dem Kraftfahrzeug über die Hochvoltschnittstelle Hochvoltenergie bereitzustellen. Dadurch kann ein Kraftfahrzeug mit der externen Schnittstelleneinrichtung beispielsweise dafür genutzt werden, um auf Baustellen, Konzerten, etc. externe Stromgeneratoren zu ersetzen.

Die Steuereinrichtung kann eingerichtet sein, als Betriebsdaten zumindest eine der folgenden Größen zu empfangen und zur Bestimmung der Energieübertragung über die Hochvoltschnittstelle und der Steuerdaten zu verarbeiten: eine von der externen Vorrichtung benötigte Mindestenergiemenge, eine von der externen Vorrichtung maximal aufnehmbare Energiemenge, eine Gesamtkapazität des elektrischen Energiespeichers, einen aktuellen Ladezustand des elektrischen Energiespeichers, eine maximale Leistung eines Antriebsaggregats und eine aktuelle Leistung des Antriebsaggregats. Vorzugsweise ist die Steuereinrichtung eingerichtet, zu prüfen, welcher der vorgenannten Größen über die Datenschnittstelle gesendet werden.

Die Identifizierungs- und/oder Betriebsdaten können eine Kennung oder eine Klassifizierungsangabe enthalten, um die Art oder Geräteklasse der externen Vorrichtung bzw. der an die Hochvoltschnittstelle angeschlossenen Komponente der externen Vorrichtung zu spezifizieren.

Die Steuereinrichtung kann somit anhand der empfangenen Identifizierungs- und/oder Betriebsdaten feststellen, ob über die externe Vorrichtung ein elektrisches Antriebsaggregat und/oder ein elektrischer Energiespeicher angeschlossen sind. Gleichzeitig kann anhand der übermittelten Betriebsdaten der aktuellen Betriebszustand dieser Komponenten von der Steuereinrichtung ermittelt werden. Dies bietet den Vorteil, dass die Steuereinrichtung des Fahrzeugs die Energieübertragung über die Hochvoltschnittstelle optimal an den Betriebszustand des elektrischen Energiespeichers und/oder des elektrischen Antriebsaggregats in der externen Vorrichtung anpassen kann.

Empfängt die Steuereinrichtung beispielsweise eine als Gesamtkapazität eines elektrischen Energiespeichers gekennzeichnete Größe und eine als aktuellen Ladezustand des elektrischen Energiespeichers gekennzeichnete Größe, kann die Steuereinrichtung feststellen, dass an der externen Schnittstelle eine externe Vorrichtung mit einem elektrischen Energiespeicher angeschlossen ist. Ferner kann die Steuereinrichtung die Gesamtkapazität und den aktuellen Ladezustand des Energiespeichers bei einer Steuerung des Energiemanagements berücksichtigen.

Gemäß einer besonders bevorzugten Ausgestaltungsform ist die Steuereinrichtung ferner eingerichtet, Identifizierungsdaten und/oder Betriebsdaten eines fahrzeuginternen, am Traktionsenergienetz angeschlossenen elektrischen Energiespeichers und/oder des Hybridantriebsaggregats des Fahrzeugs zu empfangen und in Abhängigkeit von den empfangenen Identifizierungsdaten und/oder Betriebsdaten sowohl des Fahrzeugs als auch der externen Vorrichtung Betriebsvorgaben für alle verfügbaren Antriebsaggregate des Kraftfahrzeugs und der externen Vorrichtung zu bestimmen und als Steuerdaten an die verfügbaren Antriebsaggregate des Kraftfahrzeugs und der externen Vorrichtung zu übermitteln.

Gemäß einem weiteren Aspekt können die Steuerdaten eine die Solleistung eines elektrischen Antriebsaggregats in der externen Vorrichtung beeinflussende Größe und/oder eine das Sollmoment eines elektrischen Antriebsaggregats der externen Vorrichtung beeinflussende Größe umfassen. Falls somit anhand der Identifizierungsdaten und/oder Betriebsdaten von der Steuereinrichtung erkannt wird, dass in der externen Vorrichtung ein elektrisches Antriebsaggregat vorhanden ist, kann dies durch derartige Steuerdaten entsprechend gesteuert werden.

Diese Ausführungsvariante bietet den Vorteil, dass die Steuereinrichtung sowohl zur Steuerung eines elektrischen Antriebsaggregats der externen Vorrichtung, falls vorhanden, als auch zur Steuerung des Hybridantriebsaggregats verwendet wird, so dass die externe Vorrichtung in das Gesamtenergiemanagement des Fahrzeugs eingebunden wird.

Vorzugsweise ist die Steuereinrichtung gemäß dieser Variante eingerichtet, zur Bestimmung der Betriebsvergaben eine optimale Leistungsverteilung auf alle verfügbaren Antriebsaggregate zu bestimmen. Dadurch wird ein besonders effizienter Betrieb des Gesamtverbunds aus Kraftfahrzeug und angeschlossener externer Vorrichtung ermöglicht.

Eine besonders vorteilhafte Ausgestaltungsform der Erfindung sieht hierbei vor, dass die Steuereinrichtung eingerichtet ist, einen anhand der empfangenen Identifizierungsdaten und/oder Betriebsdaten erkannten elektrischen Energiespeicher und/oder ein erkanntes elektrisches Antriebsaggregat der externen Vorrichtung in ein von der Steuereinrichtung durchgeführtes Gesamtenergiemanagement des Fahrzeugs einzubinden. Hierbei können diese Komponenten der externen Vorrichtung als ein weiteres Energiesubsystem zusätzlich zu den fahrzeuginternen Energiesubsystemen, die von der Steuereinrichtung im Rahmen eines Gesamtenergiemanagements ausgesteuert werden, behandelt werden, wobei die empfangenen Identifizierungsdaten und/oder Betriebsdaten des externen Subsystems als managementrelevante Information für das Energiemanagement des Gesamtsystems verwendet werden.

Gemäß dieser Variante kann die Steuereinrichtung für die einzelnen fahrzeuginternen Energiesubsysteme und für das über die externe Schnittstellenvorrichtung angeschlossene externe Energiesubsystem entsprechende Betriebsvorgaben in Form von Steuerdaten bestimmen, so dass sich eine Gesamtoptimierung einstellt. Die Betriebsvorgaben können unter Berücksichtigung vordefinierter Optimierungskriterien ermittelt werden, beispielsweise zur Optimierung einer Energieeffizienz oder einer Priorisierungsvorgabe für die Versorgung der Antriebsaggregate.

Eine Möglichkeit, die Steuereinrichtung gemäß dieser Variante so auszuführen, dass sie ein Gesamtenergiemanagement durchführt, kann analog zu dem Energiemanagementsystem realisiert werden, wie es in der Patentanmeldung 102013006261.6 beschrieben ist, auf die in dieser Hinsicht Bezug genommen wird und deren Inhalt hiermit in diese Anmeldung vollumfänglich aufgenommen wird.

Gemäß einem weiteren Aspekt der Erfindung kann die Steuereinrichtung gemäß einem ersten Betriebsmodus eingerichtet sein, dem elektrischen Energiespeicher und/oder dem elektrischen Antriebsaggregat der externen Vorrichtung bei Bedarf Energie aus dem Traktionsenergienetz über die Hochvoltschnittstelle durch Vorgabe entsprechender Steuerdaten bereitzustellen. Dadurch kann ein elektrischer Energiespeicher, falls ein solcher in der externen Vorrichtung vorhanden ist, vorteilhafterweise durch das Kraftfahrzeug geladen werden. Ferner kann, falls vorhanden, das elektrische Antriebsaggregat der externen Vorrichtung aus dem Traktionsenergienetz über die Hochvoltschnittstelle mit elektrischer Energie versorgt werden.

Gemäß einem weiteren Aspekt kann die Steuereinrichtung gemäß einem zweiten Betriebsmodus ferner eingerichtet sein, dem Traktionsenergienetz des Kraftfahrzeugs Energie von dem elektrischen Energiespeicher und/oder dem elektrischen Antriebsaggregat der externen Vorrichtung über die Hochvoltschnittstelle durch Vorgabe entsprechender Steuerdaten zuzuführen.

Dies bietet den Vorteil, dass dem Kraftfahrzeug bei Bedarf durch eine an der externen Schnittstelle angeschlossene externe Vorrichtung, beispielsweise einem Anhängerfahrzeug, Energie zugeführt werden kann, um beispielsweise einen entladenen Energiespeicher im Fahrzeug wieder aufzuladen.

Durch entsprechende Kombination des ersten Betriebsmodus und des zweiten Betriebsmodus kann somit eine bedarfsangepasste Energieverteilung zwischen dem Fahrzeug und der angeschlossenen externen Vorrichtung realisiert werden.

Ferner besteht dadurch die Möglichkeit, dass über einen einzigen elektrischen Energiespeicher sowohl das Fahrzeug als auch die darin angeschlossene elektrische Vorrichtung versorgt werden kann und es somit nicht unbedingt notwendig ist, einen elektrischen Energiespeicher sowohl im Fahrzeug als auch in der externen Vorrichtung vorzusehen.

Ein Ausführungsbeispiel der Erfindung sieht vor, dass an der Fahrzeugkarosserie, vorzugsweise am Heck, eine die externe Schnittstellenvorrichtung ausbildende Steckdose angeordnet ist, in welcher die Datenschnittstelle und die Hochvoltschnittstelle integriert sind. Dadurch kann mit einem Anschlussvorgang sowohl die Datenverbindung als auch die Hochvoltverbindung hergestellt werden.

Ein weiterer Aspekt der Erfindung betrifft einen Fahrzeugverbund mit einem als Nutzfahrzeug ausgebildeten Fahrzeug gemäß einem der vorgenannten Aspekte und einem an die externe Schnittstellenvorrichtung des Nutzfahrzeugs angeschlossenen Anhänger oder Auflieger. Gemäß einer vorteilhaften Variante kann der Anhänger oder Auflieger einen elektrischen Energiespeicher aufweisen, der über eine Signalleitung an der Datenschnittstelle und über eine Hochvoltleitung an der Hochvoltschnittstelle angeschlossen ist.

Ferner kann der Anhänger oder Auflieger zusätzlich oder alternativ ein elektrisches Antriebsaggregat, vorzugsweise einen elektrischen Motor oder einen elektrischen Achsantrieb, aufweisen, der über eine Signalleitung an der Datenschnittstelle und über eine Hochvoltleitung an der Hochvoltschnittstelle angeschlossen ist.

Weitere Einzelheiten und Vorteile der Erfindung werden im Folgenden unter Bezug auf die beigefügten Zeichnungen beschrieben. Es zeigen
- Figur 1: ein Zugfahrzeug und einen daran mechanisch und elektrisch angeschlossenen Anhänger;
- Figur 2: eine schematische Darstellung der Ansteuerung von Energiespeichern und elektrischen Antriebsaggregaten gemäß einer Ausgestaltungsform der Erfindung;
- Figur 3: ein beispielhaftes Ablaufdiagramm zur Ankopplung und Einbindung eines elektrischen Energiespeichers und Antriebsaggregats des Anhängers in das Fahrzeugenergiemanagement gemäß einer Ausgestaltungsform der Erfindung; und
- Figur 4: ein beispielhaftes Ablaufdiagramm zur Trennung und elektrischen Entkopplung des elektrischen Energiespeichers und Antriebsaggregats des Anhängers.

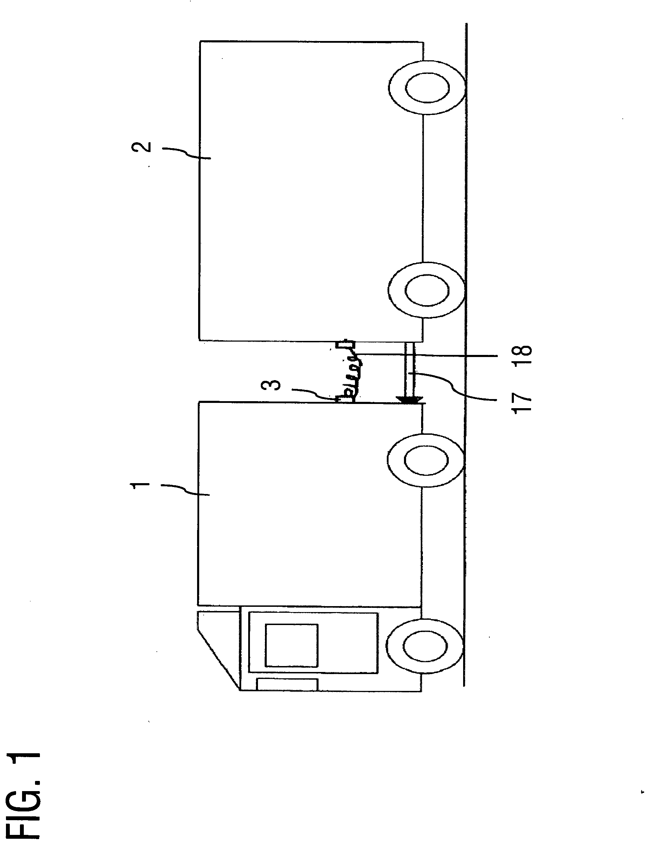

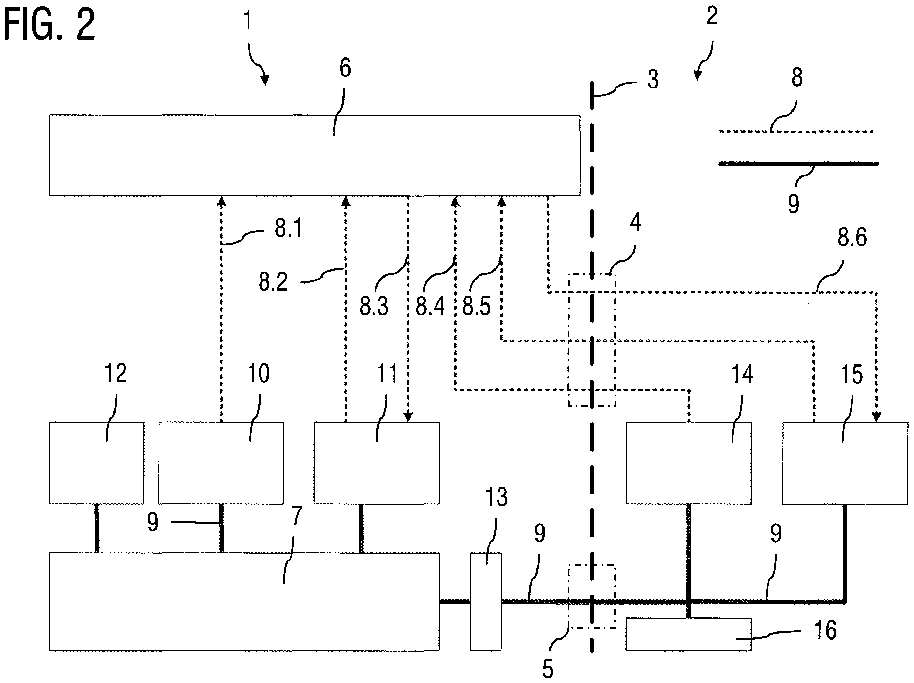

Figur 1 zeigt beispielhaft einen Fahrzeugverbund aus einem Zugfahrzeug 1 mit einem daran über eine mechanische Anhängerkupplung 17 angeschlossenen Anhänger 2. Das Zugfahrzeug 1 weist ferner an seinem Heck eine externe Schnittstellenvorrichtung 3 auf, über die der Anhänger mittels eines zweckmäßig ausgeführten Verbindungskabels 18 zur Herstellung einer Datenverbindung und einer Hochvoltverbindung mit dem Zugfahrzeug 1 verbunden ist, was nachfolgend anhand von Figur 2 näher erläutert wird.

Figur 2 illustriert anhand eines Blockdiagramms die Anbindung eines Anhängers als externe Vorrichtung 2 an ein Kraftfahrzeug 1 über eine erfindungsgemäße externe Schnittstelleneinrichtung 3, die in Figur 2 durch die gestrichelte Linie schematisch dargestellt ist.

Die Schnittstelleneinrichtung 3 kann beispielsweise am Heck der Fahrzeugkarosserie in Form einer zweckmäßig ausgeführten Steckdose angeordnet sein. Die Steckdose integriert zwei unterschiedliche Schnittstellen 4, 5. Einerseits enthält die externe Schnittstellenvorrichtung 3 eine bidirektionale Datenschnittstelle 4, die über Signalleitungen 8.4, 8.5, 8.6 mit einer Fahrzeugsteuereinrichtung 6 verbunden ist, die nachfolgend auch kurz als Steuerung bezeichnet wird.

Zum anderen enthält die externe Schnittstellenvorrichtung 3 eine Hochvoltschnittstelle 5, die über eine Hochvoltleitung 9 mit einem Traktionsenergienetz 7 des Fahrzeugs 1 verbunden ist.

Das Fahrzeug 1 ist als Hybridfahrzeug, aufweisend ein Hybridantriebsaggregat 11 und einen elektrischen Energiespeicher 10, beispielsweise einen Lithium-Ionen-Akkumulator, ausgebildet, die jeweils über eine Hochvoltleitung 9 an das Traktionsenergienetz 7 angeschlossen sind. Das Hybridantriebsaggregat 11 umfasst eine motorisch und generatorisch betreibbare elektrische Maschine und einen Verbrennungsmotor. Im Traktionsenergienetz 7 können weitere Hochvoltverbraucher über eine elektrische Geräteschnittstelle 12 angeschlossen sein.

Das Traktionsenergienetz 7 ist über eine ebenfalls von der Steuerung 6 ansteuerbare Potentialanpassungseinrichtung 13, beispielsweise einen Gleichspannungswandler, mit der Hochvoltschnittstelle 5 verbunden. Dadurch können die über die Hochvoltschnittstelle 5 vom Fahrzeug 1 ausgegebene Spannung und elektrische Leistung angepasst werden.

Die Steuerung 6 ist ausgeführt, ein Gesamtenergiemanagement des Fahrzeugs 2 durchzuführen. Insbesondere ist die Steuerung 6 ausgeführt, alle für das Energiemanagement nutzbaren Komponenten zu erfassen, z. B. verfügbare Energiespeicher, Antriebsaggregate, etc..

Hierzu übermittelt der elektrische Energiespeicher 10 über eine Signalleitung 8.1 Identifikations- und Betriebsdaten an die Steuerung 6, beispielsweise eine Gesamtkapazität und einen aktuellen Ladezustand des Energiespeichers 10. Ferner übermittelt das Hybridantriebsaggregat 11 über die Signalleitung 8.2 Identifikations- und Betriebsdaten an die Steuerung 6, beispielsweise eine maximale Leistung und eine aktuelle Leistung. Über die Steuerleitung 8.3 übermittelt die Steuerung 6 Steuervorgaben an das Hybridantriebsaggregat 11, beispielsweise eine Sollleistung und ein Sollmoment.

Der Anhänger 2 ist ebenfalls mit einem elektrischen Energiespeicher 14 und einem elektrischen Antriebsaggregat 15 ausgestattet. Das elektrische Antriebsaggregat 15 kann beispielsweise ein elektrischer Achsantrieb für den Anhänger 2 sein. Am Anhänger befindet sich ferner ein herkömmlicher Anschluss 16 für einen Plug-In-Betrieb, z. B. in Form eines Ladesteckers. Über den Anschluss 16 kann der Anhänger mit einer stationären Stromquelle verbunden werden. Der Anhänger 2 kann durch einen zur Steckdose der Schnittstelleneinrichtung 3 entsprechend ausgeführten Stecker sowohl mit der Datenschnittstelle 4 als auch mit der Hochvoltschnittstelle 5 verbunden werden.

Durch Verbinden mit der Datenschnittstelle 4 können somit über die Datenschnittstelle 4 Identifizierungs- und Betriebsdaten betreffend den elektrischen Energiespeicher 14 an die Steuerung 6 des Fahrzeugs übermittelt werden, was beispielsweise anhand der Kommunikationsverbindung 8.4 dargestellt ist. Hierzu werden vom Anhänger 2 z. B. Angaben über eine Gesamtkapazität und einen aktuellen Ladezustand und ggfs. weitere Angaben über den elektrischen Speicher 14 an die Steuerung 6 übermittelt. Ferner werden Identifizierungs- und Betriebsdaten betreffend das elektrische Antriebsaggregat 15 an die Steuerung 6 übermittelt, was schematisch durch die Kommunikationsverbindung 8.5 dargestellt ist.

Anhand der über die Datenschnittstelle 4 ermittelten Daten, die von der Steuerung 6 empfangen werden, kann die Steuerung 6 im vorliegenden Beispiel erkennen, dass ein elektrischer Energiespeicher 14 angeschlossen ist. Die Steuerung kann anhand dieser Daten ferner einen Istzustand des Energiespeichers 14 ermitteln.

In vergleichbarer Weise stellt die Linie 8.5 schematisch eine Kommunikationsverbindung zwischen dem elektrischen Antriebsaggregat 15 und der Steuerung 6 dar, über die Identifizierungs- und Betriebsdaten betreffend das elektrische Antriebsaggregat 15 vom Anhänger 2 an die Steuerung 6 über die Datenschnittstelle 4 übermittelt werden. Als Betriebsdaten für das elektrische Antriebsaggregat werden die maximale Leistung und die aktuelle Leistung des Antriebsaggregats 15 und ggfs. weitere Betriebsdaten übermittelt. Anhand der Daten kann die Fahrzeugsteuerung 6 wiederum feststellen, dass an der externen Schnittstelleneinrichtung 3 ein elektrisches Antriebsaggregat 15 angeschlossen ist und wie der aktuelle Betriebszustand des Antriebsaggregats 15 ist.

Die Steuerung 6 ist ferner eingerichtet, ein zentrales Energiemanagement für das Fahrzeug durchzuführen und, bei Anschluss einer externen Vorrichtung über die Schnittstelle, auch unter Einbindung der an die Hochvoltschnittstelle 5 angeschlossenen Komponenten 14, 15 des Anhängers 2.

Hierzu überwacht die Steuerung 6 fortlaufend die Schnittstelleneinrichtung 3, um zu erfassen, wann eine externe Vorrichtung mit der Datenschnittstelle 4 und der Hochvoltschnittstelle 5 verbunden wird. Beispielsweise kann die Steuerung 6 erkennen, dass eine externe Vorrichtung angeschlossen ist, falls die Steuerung 6 Daten über die Kommunikationsverbindungen 8.4 und 8.5 empfängt.

Falls eine externe Vorrichtung an die Schnittstelle 3 angeschlossen wird, ist die Steuerung 6 eingerichtet, die über die Schnittstelle 4 gesendeten Identifizierungs- und Betriebsdaten zu verarbeiten.

In Abhängigkeit von den empfangenen Identifizierungsdaten und/oder Betriebsdaten sowohl des Energiespeichers 14 und des Antriebsaggregats 15 der externen Vorrichtung 2 als auch des Energiespeichers 10 und des Hybridaggregats 11 des Fahrzeugs 1 übermittelt die Steuerung 6 entsprechende Betriebsvorgaben für die Antriebsaggregate im Fahrzeug und der externen Vorrichtung und sendet diese Betriebsvorgaben in Form von entsprechenden Steuerdaten über die Signalleitung 8.3 an das Hybridantriebsaggregat 11 und über die Signalleitung 8.6 und die Datenschnittstelle 4 an das elektrische Antriebsaggregat 15.

Die Steuerung 6 kann somit weitere Energiespeicher und Antriebsaggregate, die über die externe Schnittstelle 3 an das Fahrzeug angeschlossen sind, erkennen und in ein Gesamtenergiemanagement integrieren, wobei die Steuerung 6 entsprechende Betriebsvorgaben, die eine optimale Leistungsverteilung auf alle verfügbaren Antriebsaggregate ermöglichen, bestimmt. Der Austausch der Identifizierungs- und Betriebsdaten erfolgt in einem vorab festgelegten Datenformat für die Kommunikation über die Datenschnittstelle 4.

Dadurch können unterschiedliche Kombinationen und Konfigurationen von elektrischen Energiespeichern, und/oder elektrischen Antriebsaggregaten an das Fahrzeug 1 angeschlossen werden und über die Hochvoltschnittstelle 5 entsprechend versorgt werden.

Die in Figur 2 gezeigte Konfiguration umfasst einen elektrischen Energiespeicher 10 im Zugfahrzeug 1 und einen elektrischen Energiespeicher 14 im Anhänger 2 sowie ein elektrisches Antriebsaggregat 15 im Anhänger 2. Es wird jedoch betont, dass auch alternative Konfigurationen möglich sind. Beispielsweise kann in der externen Vorrichtung 2 auch nur ein elektrischer Energiespeicher 14 vorhanden sein. Statt des elektrischen Energiespeichers 14 kann lediglich ein elektrisches Antriebsaggregat 15 in der externen Vorrichtung 2 vorhanden sein und über die Hochvoltschnittstelle 5 durch das Traktionsenergienetz 7 mit Energie versorgt werden. Falls beispielsweise nur ein elektrischer Energiespeicher 14 im Anhänger 2 vorhanden ist, kann der elektrische Energiespeicher nicht nur über den Plug-In-Anschluss 16, sondern auch aus dem Traktionsenergienetz 7 geladen werden.

Ebenfalls ist es möglich, bei Bedarf Energie aus dem elektrischen Energiespeicher 14 in das elektrische Traktionsenergienetz 7 rückzuführen, um beispielsweise einen entladenen Energiespeicher 10 im Fahrzeug 1 zu laden. Gemäß einer weiteren Ausführungsvariante ist es auch möglich, dass nur im Anhängerfahrzeug 2 ein elektrischer Energiespeicher vorgesehen ist, über den der Elektromotor des Hybridantriebaggregats 11 versorgt werden kann.

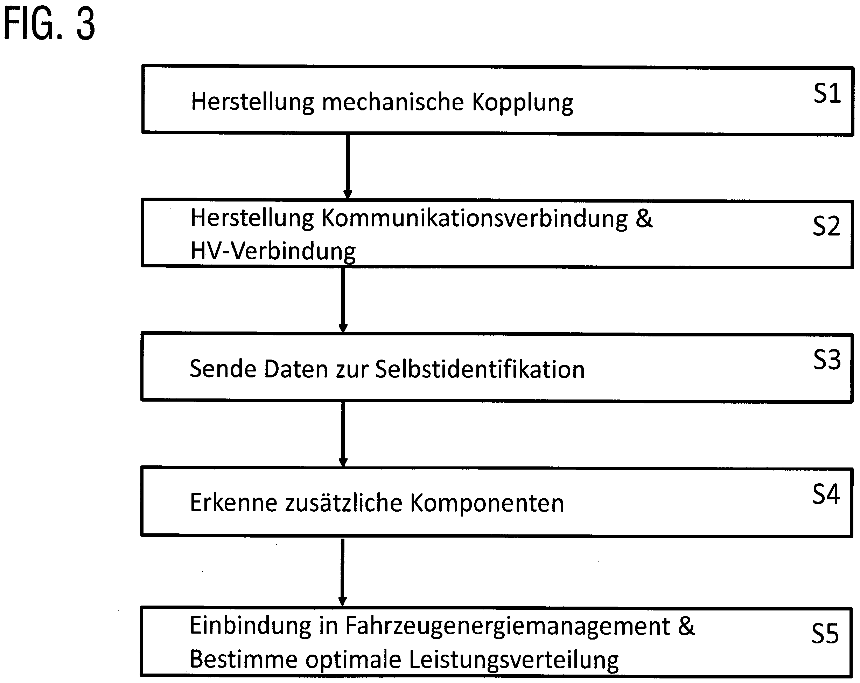

Figur 3 illustriert in einem Ablaufdiagramm beispielhaft das Ankoppeln eines Anhängers 2 an das Zugfahrzeug 1 und die Einbindung des elektrischen Energiespeichers und Antriebsaggregats des Anhängers in das Fahrzeugenergiemanagement gemäß einer Ausgestaltungsform der Erfindung.

In einem ersten Schritt S1 erfolgt die mechanische Kopplung des Anhängers 2 an das Fahrzeug 1 inklusive der Herstellung aller üblichen Verbindungen, wie beispielsweise der Luftversorgung. Die mechanische Kopplung erfolgt über eine herkömmliche und an sich bekannte mechanische Anhängerkupplung.

In einem zweiten Schritt S2 wird über die zuvor beschriebene Datenschnittstelle 4 eine Kommunikationsverbindung hergestellt, indem ein entsprechender Datenstecker des Anhängers in eine Datensteckdose der Schnittstelleneinrichtung 3 gesteckt wird. Bevorzugt erfolgt eine Kommunikationsanbindung über den CAN-Datenbus des Fahrzeugs. Anschließend erfolgt die Herstellung der elektrischen Hochvoltverbindung durch Einstecken eines entsprechenden Hochvoltsteckers des Anhängerfahrzeugs in eine hierfür vorgesehene Hochvoltsteckdose der Hochvoltschnittstelle 5.

In Schritt S3 senden anschließend die an die Hybridschnittstelle 3 des Fahrzeugs 1 angekoppelten Komponenten 14, 15 Informationen zur Selbstidentifikation an die Fahrzeugsteuerung 6 mittels der Leitungen 8.4 und 8.5, wie zuvor beschrieben.

In Schritt S4 erkennt die Fahrzeugsteuerung 6 anhand der über die Signalleitungen 8.4 und 8.5 empfangenen Daten die zusätzlich an der Hybridschnittstelle 3 angeschlossenen Komponenten 14, 15 und bindet diese funktional anhand der übermittelten Identifikations- und Betriebsdaten in die Betriebsstrategie ein. Beispielsweise ermittelt die Fahrzeugsteuerung 6 eine neue Speichergesamtkapazität, die sich aus der Speicherkapazität des elektrischen Speichers 10 im Zugfahrzeug 1 und der Speicherkapazität des elektrischen Energiespeichers 14 im Anhänger 2 ergibt.

In Schritt S5 erfolgt die Einbindung der zusätzlichen an die Hochvoltschnittstelle 5 angeschlossenen Komponenten des Anhängers 2 in ein Gesamtfahrzeugenergiemanagement. Die Fahrzeugsteuerung 6 bestimmt eine optimale Leistungsverteilung auf alle zur Verfügung stehenden Antriebsaggregate 11, 15 und steuert diese entsprechend an. Hierzu ermittelt die Fahrzeugsteuerung entsprechende Steuervorgaben, beispielsweise in Form einer Sollleistung und eines Sollmoments für das Hybridantriebsaggregat 11 und übermittelt diese über die Kommunikationsanbindung 8.3 an das Hybridantriebsaggregat 11. Ebenfalls ermittelt die Fahrzeugsteuerung 6 entsprechende Steuervorgaben, beispielsweise in Form einer Sollleistung und eines Sollmoments für das elektrische Antriebsaggregat 15 des Anhängers 2, und übermittelt diese Steuervorgaben bzw. Betriebsvorgaben über die Kommunikationsanbindung 8.6 an das elektrische Antriebsaggregat 15.

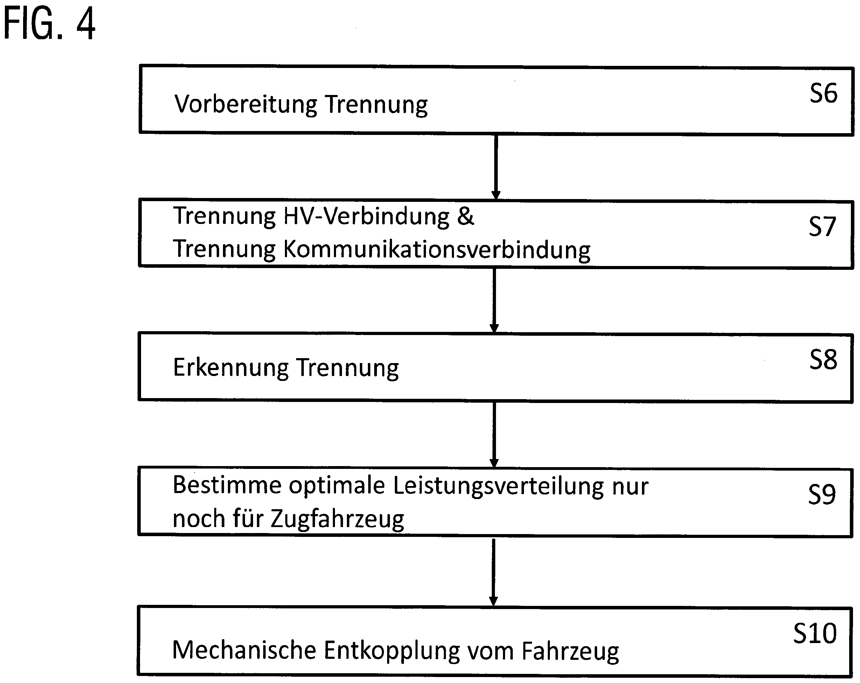

Figur 4 zeigt beispielhaft ein Ablaufdiagramm zum Abkoppeln eines Anhängers 2 vom Zugfahrzeug 1. In Schritt S6 erfolgt ein Vorbereiten der Trennung des Anhängers vom Zugfahrzeug durch einen "systemisches" Abmelden der Hochvoltkomponenten 14, 15. Dies kann beispielsweise durch einen entsprechend im Fahrerhaus betätigten Schalter erfolgen, der der Fahrzeugsteuerung 6 signalisiert, dass der Anhänger 2 nun abgekoppelt wird. Eine weitere Möglichkeit besteht darin, in der externen Schnittstelle 3, z. B. in der Hochvoltsteckverbindung 5, eine Sicherung zu integrieren, die beim Lösen der Steckverbindung betätigt wird und an die Fahrzeugsteuerung 6 ein Lösen der Hochvoltverbindung signalisiert.

Anschließend erfolgt in Schritt S7 sowohl die Trennung der Hochvoltverbindung als auch anschließend die Trennung der Kommunikationsverbindung über die Datenschnittstelle 4, beispielsweise durch Lösen der CAN-Datenbusverbindung. Nach der Entfernung der Hochvoltkomponenten 14 und 15 durch Trennung von der Schnittstelleneinrichtung 3 senden diese keine Identifikations- und Betriebsdaten mehr an die Fahrzeugsteuerung.

In Schritt S8 erkennt die Fahrzeugsteuerung 6 anhand der Beendigung dieser Datenübertragung, dass keine entsprechende Identifikations- und Betriebsdaten über die Datenschnittstelle 4 gesendet werden und dass somit keine zusätzlichen externen Komponenten mehr im Systemverbund verfügbar sind. Folglich kann die Fahrzeugsteuerung 6 die Betriebsparameter für das Energiemanagement entsprechend anpassen. Beispielsweise hat die geänderte Speichergesamtkapazität, die von der Steuerung 6 bestimmt wird, nun lediglich den Wert der fahrzeuginternen Kapazität des elektrischen Energiespeichers 10. Ferner ergibt sich der Leistungsbedarf beispielsweise nur durch das fahrzeuginterne Hybridantriebsaggregat 11 und nicht mehr durch ein zusätzlich angeschlossenes Antriebsaggregat 15 des Anhängers 2.

In Schritt S9 wird dann für diese geänderte Systemkonfiguration wiederum die optimale Leistungsverteilung, d. h. nur noch für das Zugfahrzeug 1, bestimmt. Schließlich erfolgt in Schritt S10 die mechanische Entkopplung des Anhängers 2 vom Zugfahrzeug durch Lösen der mechanischen Anhängerkupplung.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern die Erfindung soll alle Ausführungsbeispiele umfassen, die in den Bereich der beigefügten Patentansprüche fallen.

### Bezugszeichenliste

- 1: Fahrzeug, beispielsweise Nutzfahrzeug oder Zugfahrzeug
- 2: Externe Vorrichtung, beispielsweise Anhänger
- 3: Externe Schnittstelleneinrichtung
- 4: Datenschnittstelle
- 5: Hochvoltschnittstelle
- 6: Steuereinrichtung
- 7: Traktionsenergienetz
- 8, 8.1 - 8.6: Signalleitung, Kommunikationsanbindung
- 9: Hochvoltleitung, elektrische Leistungsanbindung
- 10: Elektrischer Energiespeicher des Fahrzeugs
- 11: Hybridantriebsaggregat des Fahrzeugs
- 12: Elektrische Geräteschnittstelle
- 13: Potentialanpassungseinrichtung
- 14: Elektrischer Energiespeicher des Anhängers
- 15: Elektrisches Antriebsaggregat des Anhängers
- 16: Plug-In-Anschluss/Stecker für Plug-In-Betrieb
- 17: Mechanische Anhängerkupplung
- 18: Anschlusskabel

## Patentansprüche

1. Kraftfahrzeug (1), vorzugsweise Nutzfahrzeug, mit
einem Hybridantriebsaggregat (11), das mit einem Traktionsenergienetz (7) des Kraftfahrzeugs verbunden ist;
einer externen Schnittstelleneinrichtung (3), die eine bidirektionale Datenschnittstelle zum Datenaustausch mit einer externen Vorrichtung (2) und eine Hochvoltschnittstelle (5) zum Austausch von elektrischer Energie mit der externen Vorrichtung (2) aufweist, wobei die Hochvoltschnittstelle (5) mit dem Traktionsenergienetz (7) des Kraftfahrzeugs (1) verbunden ist; und
einer Steuereinrichtung (6), die eingerichtet ist, über eine Datenschnittstelle (4) Identifizierungsdaten und/oder Betriebsdaten von der externen Vorrichtung (2) zu empfangen, die einen elektrischen Energiespeicher (14) und/oder ein strombetriebenes Antriebsaggregat (15) der externen Vorrichtung (2) kennzeichnen,
wobei die Steuereinrichtung (6) ferner eingerichtet ist, in Abhängigkeit von den empfangenen Identifizierungsdaten und/oder Betriebsdaten sowohl eine Energieübertragung über die Hochvoltschnittstelle (5) zu steuern als auch Steuerdaten für die externe Vorrichtung (2) zu bestimmen und über die Datenschnittstelle (4) an die externe Vorrichtung (2) zu senden, und wobei
(a) die Steuereinrichtung (6) ferner eingerichtet ist, Identifizierungsdaten und/oder Betriebsdaten eines fahrzeuginternen elektrischen Energiespeichers (10) und/oder des Hybridantriebsaggregats (11) des Fahrzeugs (1) zu empfangen; und
(b) in Abhängigkeit von den empfangenen Identifizierungsdaten und/oder Betriebsdaten sowohl des Fahrzeugs (1) als auch der externen Vorrichtung (2) Betriebsvorgaben für alle verfügbaren Antriebsaggregate (11, 15) des Kraftfahrzeugs (1) und der externen Vorrichtung (2) zu bestimmen und als Steuerdaten an die verfügbaren Antriebsaggregate (11, 15) des Kraftfahrzeugs (1) und der externen Vorrichtung (2) zu übermitteln;
**dadurch gekennzeichnet, dass**
die Steuereinrichtung (6) ferner eingerichtet ist, den anhand der empfangenen Identifizierungsdaten und/oder Betriebsdaten erkannten elektrischen Energiespeicher (14) und/oder das anhand der empfangenen Identifizierungsdaten und/oder Betriebsdaten erkannte elektrische Antriebsaggregat (15) der externen Vorrichtung (2) als ein weiteres Energiesubsystem zusätzlich zu den fahrzeuginternen Energiesubsystemen in ein von der Steuereinrichtung (6) durchgeführtes Gesamtenergiemanagement einzubinden, falls die Steuereinrichtung (6) anhand der empfangenen Identifizierungsdaten und/oder Betriebsdaten erkennt, dass an der externen Schnittstellenvorrichtung (3) eine externe Vorrichtung (2) angeschlossen ist.

2. Kraftfahrzeug (1) nach Anspruch 1, **dadurch gekennzeichnet, dass** die Steuereinrichtung (6) eingerichtet ist, als Betriebsdaten zumindest eine der folgenden Größen zu empfangen und zur Bestimmung der Energieübertragung über die Hochvoltschnittstelle (5) und der Steuerdaten zu verarbeiten:
eine von der externen Vorrichtung (2) benötigte Mindestenergiemenge, eine von der externen Vorrichtung (2) maximal aufnehmbare Energiemenge, eine Gesamtkapazität des elektrischen Energiespeichers (14), einen aktuellen Ladezustand des elektrischen Energiespeichers (14), eine maximale Leistung eines Antriebsaggregats (15) und eine aktuelle Leistung des Antriebsaggregats (15).

3. Kraftfahrzeug (1) nach Anspruch 1 oder 2, **dadurch gekennzeichnet, dass** die Steuereinrichtung (6) eingerichtet ist, zur Bestimmung der Betriebsvorgaben eine optimale Leistungsverteilung auf alle verfügbaren Antriebsaggregate (11, 15) zu bestimmen.

4. Kraftfahrzeug (1) nach einem der vorhergehenden Ansprüche, **gekennzeichnet durch** einen ersten Betriebsmodus, gemäß dem die Steuereinrichtung (6) eingerichtet ist, dem elektrischen Energiespeicher (14) und/oder dem elektrischen Antriebsaggregat (15) der externen Vorrichtung (2) bei Bedarf Energie aus dem Traktionsenergienetz (7) über die Hochvoltschnittstelle (5) durch Vorgabe entsprechender Steuerdaten bereitzustellen.

5. Kraftfahrzeug (1) nach einem der vorhergehenden Ansprüche, **gekennzeichnet durch** einen zweiten Betriebsmodus, gemäß dem die Steuereinrichtung (6) eingerichtet ist, dem Traktionsenergienetz (7) des Kraftfahrzeugs (1) Energie von dem elektrischem Energiespeicher (14) und/oder dem elektrischen Antriebsaggregat (15) der externen Vorrichtung (2) über die Hochvoltschnittstelle (5) durch Vorgabe entsprechender Steuerdaten zuzuführen.

6. Kraftfahrzeug (1) nach einem der vorhergehenden Ansprüche, **dadurch gekennzeichnet, dass** die Steuerdaten eine die Sollleistung beeinflussende Größe und/oder eine das Sollmoment eines elektrischen Antriebsaggregats (15) beeinflussende Größe umfassen.

7. Kraftfahrzeug (1) nach einem der vorhergehenden Ansprüche, **dadurch gekennzeichnet,**
(a) **dass** das Hybridantriebsaggregat (11) eine motorisch und generatorisch betreibbare elektrische Maschine und eine Brennkraftmaschine zum Vortrieb des Kraftfahrzeugs (1) umfasst; und/oder
(b) **dass** das Kraftfahrzeug (1) einen an das Traktionsenergienetz (7) angeschlossenen elektrischen Energiespeicher (10) aufweist; und/oder
(c) **dass** die externe Vorrichtung (2) ein Anhänger oder Auflieger ist.

8. Kraftfahrzeug (1) nach einem der vorhergehenden Ansprüche, **dadurch gekennzeichnet, dass** an der Fahrzeugkarosserie, vorzugweise am Heck, eine die externe Schnittstellenvorrichtung ausbildende Steckdose angeordnet ist, in welche die Datenschnittstelle und die Hochvoltschnittstelle (5) integriert sind.

9. Fahrzeugverbund, mit einem Nutzfahrzeug (1) nach einem der Ansprüche 1 bis 8 und einem an die externe Schnittstellenvorrichtung (3) des Nutzfahrzeugs (1) angeschlossenen Anhänger (2) oder Auflieger.

10. Fahrzeugverbund nach Anspruch 9, **dadurch gekennzeichnet, dass**
(a) der Anhänger (2) oder Auflieger einen elektrischen Energiespeicher (14) aufweist, der über eine Signalleitung (8.4) an der Datenschnittstelle (4) und über eine Hochvoltleitung (9) an der Hochvoltschnittstelle (5) angeschlossen ist; und/oder
(b) dass der Anhänger (2) oder Auflieger ein elektrisches Antriebsaggregat (15), vorzugsweise einen elektrischen Motor oder einen elektrischen Achsantrieb, aufweist, der über eine Signalleitung (8.5, 8.6) an der Datenschnittstelle (4) und über eine Hochvoltleitung (9) an der Hochvoltschnittstelle (5) angeschlossen ist.

## Claims

1. A motor vehicle (1), preferably commercial vehicle, with a hybrid drive unit (11) which is connected to a traction energy network (7) of the motor vehicle; an external interface device (3) which has a bidirectional data interface for data exchange with an external apparatus (2) and a high-voltage interface (5) for the exchange of electrical energy with the external apparatus (2), wherein the high-voltage interface (5) is connected to the traction energy network (7) of the motor vehicle (1); and
a control device (6) which is configured to receive identification data and/or operating data from the external apparatus (2) via a data interface (4), which identify an electrical energy storage unit (14) and/or an electrically operated drive unit (15) of the external apparatus (2),
wherein the control device (6) is further configured, depending on the received identification data and/or operating data, both to control an energy transmission via the high-voltage interface (5) and to determine control data for the external apparatus (2) and to send the control data to the external apparatus (2) via the data interface (4), and wherein
a) the control device (6) is further configured to receive identification data and/or operating data of an in-vehicle electrical energy storage unit (10) and/or of the hybrid drive unit (11) of the vehicle (1); and
b) depending on the received identification data and/or operating data both of the vehicle (1) and of the external apparatus (2), to determine operating specifications for all available drive units (11, 15) of the motor vehicle (1) and of the external apparatus (2) and to transmit the operating specifications as control data to the available drive units (11, 15) of the motor vehicle (1) and of the external apparatus (2);
**characterized in that**
the control device (6) is further configured to incorporate the electrical energy storage unit (14) identified by means of the received identification data and/or operating data and/or the electric drive unit (15) of the external apparatus (2) identified by means of the received identification data and/or operating data as a further energy subsystem in addition to the in-vehicle energy subsystems into a total energy management performed by the control device (6), if the control device (6) detects, by means of the received identification data and/or operating data, that an external apparatus (2) is connected to the external interface device (3).

2. The motor vehicle (1) according to Claim 1, **characterized in that** the control device (6) is configured to receive at least one of the following variables as operating data and to process the at least one variable in order to determine the energy transmission via the high-voltage interface (5) and the control data:
a minimum amount of energy required by the external apparatus (2), a maximum amount of energy that can be received by the external apparatus (2), a total capacity of the electrical energy storage unit (14), a current state of charge of the electrical energy storage unit (14), a maximum power of a drive unit (15) and a current power of the drive unit (15).

3. The motor vehicle (1) according to Claim 1 or 2, **characterized in that** the control device (6) is configured to determine an optimal power distribution over all available drive units (11, 15) in order to determine the operating specifications.

4. The motor vehicle (1) according to one of the preceding claims, **characterized by** a first operating mode, according to which the control device (6) is configured to provide the electrical energy storage unit (14) and/or the electric drive unit (15) of the external apparatus (2) with energy from the traction energy network (7) via the high-voltage interface (5) when required by specifying corresponding control data.

5. The motor vehicle (1) according to one of the preceding claims, **characterized by** a second operating mode, according to which the control device (6) is configured to supply the traction energy network (7) of the motor vehicle (1) with energy from the electrical energy storage unit (14) and/or the electric drive unit (15) of the external apparatus (2) via the high-voltage interface (5) by specifying corresponding control data.

6. The motor vehicle (1) according to one of the preceding claims, **characterized in that** the control data comprise a variable influencing the setpoint power and/or a variable influencing the setpoint torque of an electric drive unit (15).

7. The motor vehicle (1) according to one of the preceding claims, **characterized in that**
a) the hybrid drive unit (11) comprises an electric machine that can be operated as a motor and as a generator and an internal combustion engine for propelling the motor vehicle (1); and/or
b) the motor vehicle (1) has an electrical energy storage unit (10) connected to the traction energy network (7); and/or
c) the external apparatus (2) is a trailer or semitrailer.

8. The motor vehicle (1) according to one of the preceding claims, **characterized in that** a socket forming the external interface device is arranged on the vehicle body, preferably at the rear, into which socket the data interface and the high-voltage interface (5) are integrated.

9. A vehicle combination with a commercial vehicle (1) according to one of Claims 1 to 8 and a trailer (2) or semitrailer connected to the external interface device (3) of the commercial vehicle (1).

10. The vehicle combination according to Claim 9, **characterized in that**
a) the trailer (2) or semitrailer has an electrical energy storage unit (14) which is connected to the data interface (4) via a signal line (8.4) and to the high-voltage interface (5) via a high-voltage line (9); and/or
b) the trailer (2) or semitrailer has an electric drive unit (15), preferably an electric motor or an electric axle drive, which is connected to the data interface (4) via a signal line (8.5, 8.6) and is connected to the high-voltage interface (5) via a high-voltage line (9).

## Revendications

1. Véhicule automobile (1), de préférence véhicule utilitaire, comprenant
un groupe moteur hybride (11) qui est relié à un réseau d'énergie de traction (7) du véhicule automobile ;
un équipement d'interface externe (3) qui présente une interface de données bidirectionnelle pour l'échange de données avec un dispositif externe (2) et une interface haute tension (5) pour l'échange d'énergie électrique avec le dispositif externe (2), l'interface haute tension (5) étant reliée au réseau d'énergie de traction (7) du véhicule automobile (1) ; et
un équipement de commande (6) qui est aménagé pour recevoir par une interface de données (4) des données d'identification et/ou des données de fonctionnement du dispositif externe (2) qui caractérisent un accumulateur d'énergie électrique (14) et/ou un groupe moteur à alimentation électrique (15) du dispositif externe (2),
l'équipement de commande (6) étant en outre aménagé à la fois pour commander en fonction des données d'identification et/ou des données de fonctionnement reçues une transmission d'énergie par l'interface haute tension (5) et pour déterminer des données de commande pour le dispositif externe (2) et les envoyer au dispositif externe (2) par l'interface de données (4), et dans lequel
(a) l'équipement de commande (6) est en outre aménagé pour recevoir des données d'identification et/ou des données de fonctionnement d'un accumulateur d'énergie électrique embarqué (10) et/ou du groupe moteur hybride (11) du véhicule (1) ; et
(b) en fonction des données d'identification et/ou des données de fonctionnement reçues, à la fois du véhicule (1) et du dispositif externe (2), pour déterminer des spécifications de fonctionnement pour tous les groupes moteurs disponibles (11, 15) du véhicule automobile (1) et du dispositif externe (2) et les communiquer sous forme de données de commande aux groupes moteurs disponibles (11, 15) du véhicule automobile (1) et du dispositif externe (2) ;
**caractérisé en ce que** l'équipement de commande (6) est en outre aménagé pour intégrer l'accumulateur d'énergie électrique (14) reconnu à l'aide des données d'identification et/ou des données de fonctionnement reçues et/ou le groupe moteur électrique (15) reconnu à l'aide des données d'identification et/ou des données de fonctionnement reçues du dispositif externe (2) comme un sous-système énergétique supplémentaire en plus des sous-systèmes énergétiques embarqués dans une gestion d'énergie globale effectuée par l'équipement de commande (6), si l'équipement de commande (6) reconnaît à l'aide des données d'identification et/ou des données de fonctionnement reçues qu'un dispositif externe (2) est connecté au dispositif d'interface externe (3).

2. Véhicule automobile (1) selon la revendication 1, **caractérisé en ce que** l'équipement de commande (6) est aménagé pour recevoir comme données de fonctionnement au moins l'une des grandeurs suivantes et pour la traiter en vue de la détermination de la transmission d'énergie par l'interface haute tension (5) et des données de commande :
une quantité d'énergie minimale nécessaire au dispositif externe (2), une quantité d'énergie pouvant être absorbée au maximum par le dispositif externe (2), une capacité totale de l'accumulateur d'énergie électrique (14), un état de charge actuel de l'accumulateur d'énergie électrique (14), une puissance maximale d'un groupe moteur (15) et une puissance actuelle du groupe moteur (15).

3. Véhicule automobile (1) selon la revendication 1 ou 2, **caractérisé en ce que** l'équipement de commande (6) est aménagé pour déterminer une répartition de puissance optimale sur tous les groupes moteurs disponibles (11, 15) en vue de la détermination des spécifications de fonctionnement.

4. Véhicule automobile (1) selon l'une quelconque des revendications précédentes, **caractérisé par** un premier mode de fonctionnement, selon lequel l'équipement de commande (6) est aménagé pour fournir en cas de besoin à l'accumulateur d'énergie électrique (14) et/ou au groupe moteur électrique (15) du dispositif externe (2) de l'énergie provenant du réseau d'énergie de traction (7) par l'interface haute tension (5) en spécifiant des données de commande correspondantes.

5. Véhicule automobile (1) selon l'une quelconque des revendications précédentes, **caractérisé par** un deuxième mode de fonctionnement, selon lequel l'équipement de commande (6) est aménagé pour alimenter le réseau d'énergie de traction (7) du véhicule automobile (1) en énergie provenant de l'accumulateur d'énergie électrique (14) et/ou du groupe moteur électrique (15) du dispositif externe (2) par l'interface haute tension (5) en spécifiant des données de commande correspondantes.

6. Véhicule automobile (1) selon l'une quelconque des revendications précédentes, **caractérisé en ce que** les données de commande comprennent une grandeur affectant la puissance nominale et/ou une grandeur affectant le couple nominal d'un groupe moteur électrique (15).

7. Véhicule automobile (1) selon l'une quelconque des revendications précédentes, **caractérisé en ce que**
(a) le groupe moteur hybride (11) comprend une machine électrique pouvant fonctionner en mode moteur et en mode générateur et un moteur à combustion interne pour la propulsion du véhicule automobile (1) ; et/ou
(b) le véhicule automobile (1) présente un accumulateur d'énergie électrique (10) connecté au réseau d'énergie de traction (7) ; et/ou
(c) le dispositif externe (2) est une remorque ou une semi-remorque.

8. Véhicule automobile (1) selon l'une quelconque des revendications précédentes, **caractérisé en ce que** sur la carrosserie de véhicule, de préférence à l'arrière, une prise de courant réalisant le dispositif d'interface externe est disposée dans laquelle sont intégrées l'interface de données et l'interface haute tension (5).

9. Train de véhicule, comprenant un véhicule utilitaire (1) selon l'une quelconque des revendications 1 à 8 et une remorque (2) ou une semi-remorque connectée au dispositif d'interface externe (3) du véhicule utilitaire (1).

10. Train de véhicule selon la revendication 9, **caractérisé en ce que**
(a) la remorque (2) ou la semi-remorque présente un accumulateur d'énergie électrique (14) qui est connecté à l'interface de données (4) par une ligne de signal (8.4) et à l'interface haute tension (5) par une ligne haute tension (9) ; et/ou
(b) la remorque (2) ou la semi-remorque présente un groupe moteur électrique (15), de préférence un moteur électrique ou un entraînement d'essieu électrique, qui est connecté à l'interface de données (4) par une ligne de signal (8.5, 8.6) et à l'interface haute tension (5) par une ligne haute tension (9).
